# EUROPEAN PATENT APPLICATION

(11) **EP 4 711 375 A1**
(43) Date of publication of application: **18.03.2026**
(21) Application number: 23947351.5
(22) Date of filing: 20.11.2023
(51) Int. Cl.: C07F 17/00, C07C 13/465, C08F 210/02, C08F 10/02, C08F 4/649

(54) **METALLOCENE COMPOUND, CATALYST COMPOSITION, OLEFIN POLYMERIZATION METHOD, AND ETHYLENE-CYCLOOLEFIN COPOLYMER AND PREPARATION METHOD THEREFOR**

(30) Priority: 01.08.2023 CN 202310961989; 01.08.2023 CN 202310961997
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: WANG, Wei, Beijing 100013 (CN); QU, Shuzhang, Beijing 100013 (CN); LI, Xinwei, Beijing 100013 (CN); AN, Jingyan, Beijing 100013 (CN); CHEN, Jian, Beijing 100013 (CN); ZHENG, Cui, Beijing 100013 (CN); WANG, Ying, Beijing 100013 (CN)
(74) Representative: Hoffmann Eitle
(86) International application number: PCT/CN2023/132577
(87) International publication number: WO 2025/025413

(57) **Abstract**

A metallocene compound, a catalyst composition using the metallocene compound, an olefin polymerization method using the catalyst composition, and an ethylene-cycloolefin copolymer and a preparation method therefor. The metallocene compound has a structure as represented by formula (1), in which formula M is a tetravalent transition metal atom; X¹ and X² are each independently a halogen atom, an alkyl having 1 to 10 carbon atoms, an aryl having 6 to 12 carbon atoms or an N,N-dialkyl amino having 2 to 8 carbon atoms. The catalyst composition has the advantages of high catalytic activity, good copolymerization performance and a high molecular weight of an obtained polymer.

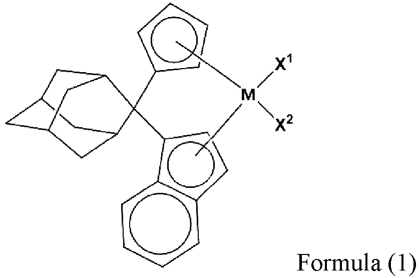

## Description

### Cross Reference to Related Applications

The application claims the benefit of the China patent application 202310961989.1 and 202310961997.6, filed on August 1, 2023, the contents of which are incorporated herein by reference.

### Field of the Invention

The present invention relates to the field of olefin polymerization, in particular to a metallocene compound, a catalyst composition using the metallocene compound, an olefin polymerization method using the catalyst composition, and an ethylene-cycloolefin copolymer and a preparation method therefor.

### Background of the Invention

The metallocene compound for olefin polymerization has been a research hotspot in organometallic chemistry, catalytic chemistry, polymer chemistry and materials science in recent decades. With this type of catalyst, olefin polymers with uniform distribution of molecular weight and chemical composition can be obtained, the molecular structure and molecular weight of the polymer are highly controllable by adjusting the catalyst structure. The strong copolymerization capability of the metallocene is reflected in two aspects (Chemistry Select, 2020, 5, 7581-7585): on one hand, the content of comonomers contained in the copolymer prepared with the metallocene is higher than other catalysts under the same polymerization conditions, it exhibits the copolymerization efficiency of metallocene; on the other hand, some monomers which cannot be catalytically polymerized by other catalysts can also be used as the comonomer of metallocene compound system, it indicates the broad spectrum of copolymerization. Due to the high efficiency and broad spectrum of copolymerization of metallocene compound, the metallocene compound is capable of catalyzing and producing many new-type copolymers with new composition and structure, compared to the copolymers prepared with the other catalysts, the new-type copolymers may exhibit new properties, thereby facilitating new applications of the polyolefin materials in new fields.

The structure of a metallocene catalyst determines its catalytic performance, and small changes in structure may lead to great changes in catalytic performance. When designing a metallocene catalyst, it is possible to improve the polymerization activity and copolymerization performance of the catalyst as well as the molecular weight of the polymer as far as possible through the structural design, thereby widening the operating space for production and improving the economical efficiency of production process.

The existing metallocene catalysts still have insufficiencies that the catalyst activity, copolymerization performance, and polymer molecular weight need to be improved.

### Summary of the Invention

An object of the present invention is to provide a novel metallocene compound, a catalyst composition using the metallocene compound, an olefin polymerization method using the catalyst composition, an ethylene-cycloolefin copolymer and a preparation method therefor, the catalyst composition of the invention has the advantages of high catalytic activity, good copolymerization performance and a high molecular weight of an obtained polymer, and the catalyst can be easily synthesized with a low cost.

In order to achieve the above objects, the first aspect of the present invention provides a metallocene compound, wherein the metallocene compound has a structure represented by formula (1), 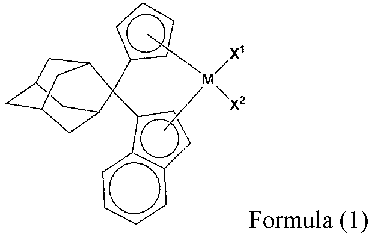 wherein in formula (1), M is a tetravalent transition metal atom; and X¹ and X² are each independently a halogen atom, an alkyl having 1 to 10 carbon atoms, an aryl having 6 to 12 carbon atoms or an N,N-dialkyl amino having 2 to 8 carbon atoms.

Preferably, M is a titanium atom, a zirconium atom or a hafnium atom, more preferably a titanium atom or a zirconium atom, further preferably a zirconium atom.

Preferably, X¹ and X² are each independently a halogen atom, an alkyl having 1 to 6 carbon atoms, an aryl having 6 to 10 carbon atoms or an N,N-dialkyl amino having 2 to 6 carbon atoms; more preferably, X¹ and X² are each independently a halogen atom, an alkyl having 1 to 3 carbon atoms, an aryl having 6 to 8 carbon atoms or an N,N-dialkyl amino having 2 to 6 carbon atoms; further preferably, X¹ and X² are each independently F, Cl, Br, I, methyl, ethyl, propyl, phenyl, benzyl, N,N-dimethyl amino, N,N-diethyl amino or N,N-dipropyl amino; still further preferably, X¹ and X² are each independently Cl, methyl, benzyl, or N,N-dimethyl amino.

The second aspect of the present invention provides a catalyst composition, wherein the catalyst composition comprises the following components:
a) the metallocene compound according to the first aspect of the present invention; and
b) a cocatalyst component.

Preferably, the cocatalyst component comprises an alkyl aluminoxane or a combination of an organoboron compound and an organoaluminum compound; more preferably, the cocatalyst component is an alkyl aluminoxane or a combination of an organoboron compound and an organoaluminum compound.

Preferably, the alkyl aluminoxane is a compound selected from structures shown in formula (2) and/or formula (3), 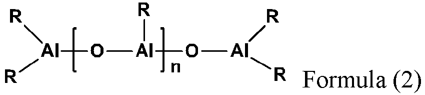 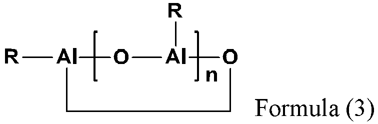 in formula (2) and formula (3), R is selected from an alkyl having 1 to 15 carbon atoms, and n represents an integer of 4 to 30; more preferably, R is selected from an alkyl having 1 to 5 carbon atoms, and n represents an integer of 10 to 30.

Preferably, the alkyl aluminoxane is methyl aluminoxane.

Preferably, the organoboron compound is [B(C₆F₅)₄]⁻Z⁺, Z⁺ having a structure shown in formula (4) or formula (5),

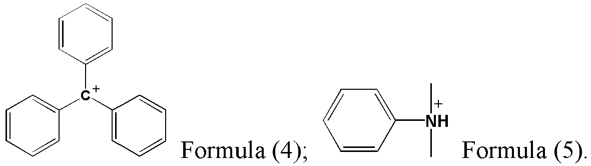

Preferably, the organoaluminum compound is a compound having a structure represented by a general formula AlX₁X₂X₃, X₁, X₂ and X₃ are each a halogen atom or an alkyl having 1 to 12 carbon atoms, X₁, X₂ and X₃ may be the same or different, and at least one is an alkyl having 1 to 12 carbon atoms.

Preferably, the organoaluminum compound is one or a mixture of two or more of diethyl aluminum chloride, triethyl aluminum, tri-isobutyl aluminum, tri-n-hexyl aluminum and tri-n-octyl aluminum, more preferably tri-isobutyl aluminum.

Preferably, the cocatalyst component is an alkyl aluminoxane, and a molar ratio of the metallocene compound to the alkyl aluminoxane in terms of aluminum is 1: (100-50,000), more preferably 1: (500-10,000), further preferably 1: (500-2,000).

Preferably, the cocatalyst component is a combination of an organoboron compound and an organoaluminum compound, a molar ratio of the metallocene compound to the organoboron compound is 1: (1-20), more preferably 1: (1-5), further preferably 1: (1-2); a molar ratio of the metallocene compound to the organoaluminum compound is 1: (10-5,000), preferably 1: (50-1,000), more preferably 1: (50-500).

The third aspect of the present invention provides an olefin polymerization method, wherein the method comprises contacting an olefin with the catalyst composition according to the second aspect of the present application to carry out a polymerization reaction.

Preferably, a concentration of the metallocene compound in the polymerization reaction system is within the range from 1×10⁻⁸ mol/L to 1×10⁻² mol/L, more preferably within the range from 1×10⁻⁶ mol/L to 1×10⁻³ mol/L.

Preferably, the olefin is ethylene or a combination of ethylene and α-olefin.

Preferably, the α-olefin is one or more selected from the group consisting of propene, 1-butene, 1-hexene, 1-octene and 4-methyl-l-pentene.

Preferably, the ethylene has a partial pressure within the range of 0.1 to 6 MPa, more preferably within the range of 0.1 to 3 MPa.

Preferably, the polymerization reaction is performed in the presence of an organic solvent, which is one or more of toluene, cyclohexane and hexane.

Preferably, the polymerization reaction temperature is from -50°C to 200°C, and the polymerization reaction time is within the range of 1 to 300 minutes; more preferably, the polymerization reaction temperature is from -20°C to 150°C, and the polymerization reaction time is within the range of 5 to 60 minutes.

The fourth aspect of the present invention provides a preparation method for an ethylene-cycloolefin copolymer, wherein the method comprises: subjecting ethylene and cycloolefin to a copolymerization reaction by using the catalyst composition according to the second aspect of the present invention.

Preferably, a concentration of the metallocene compound in the copolymerization reaction system is within the range from 1×10⁻⁸ mol/L to 1×10⁻² mol/L, more preferably within the range from 1×10⁻⁶ mol/L to 1×10⁻³ mol/L.

Preferably, the cycloolefin is one or more of cyclopentene, cyclohexene, cycloheptene, cyclooctene, norbornene, tetracyclo [6.2.1.13,6.2,7] dodec-4-ene.

Preferably, the ethylene has a partial pressure within the range of 0.1 to 6 MPa, more preferably within the range of 0.1 to 3 MPa.

Preferably, the copolymerization reaction is performed in the presence of an organic solvent, which is one or more of toluene, cyclohexane and hexane.

Preferably, the copolymerization reaction temperature is from -50°C to 200°C, and the copolymerization reaction time is within the range of 1 to 300 minutes; more preferably, the copolymerization reaction temperature is from -20°C to 150°C, and the copolymerization reaction time is within the range of 5 to 60 minutes.

The fifth aspect of the present invention provides an ethylene-cycloolefin copolymer, wherein the copolymer is prepared with the method according to the fourth aspect of the present invention.

Due to the technical solutions, the present invention provides a novel metallocene compound, a catalyst composition using the metallocene compound, an olefin polymerization method using the catalyst composition, an ethylene-cycloolefin copolymer and a preparation method therefor, the catalyst composition of the invention has the advantages of high catalytic activity, good copolymerization performance and a high molecular weight of an obtained polymer, and the catalyst can be easily synthesized with a low cost.

### Detailed Description of the Embodiments

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a metallocene compound, wherein the metallocene compound has a structure represented by formula (1), 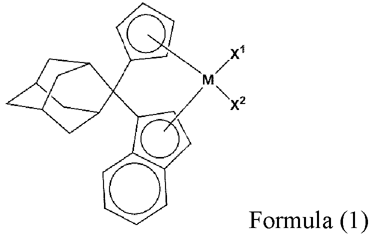 wherein in formula (1), M is a tetravalent transition metal atom; and X¹ and X² are each independently a halogen atom, an alkyl having 1 to 10 carbon atoms, an aryl having 6 to 12 carbon atoms or an N,N-dialkyl amino having 2 to 8 carbon atoms.

In the metallocene compound according to the invention, in formula (1), M is a tetravalent transition metal atom, preferably, M is a titanium atom, a zirconium atom or a hafnium atom; more preferably, M is a titanium atom or a zirconium atom; further particularly, M is a zirconium atom.

In the metallocene compound according to the present invention, in formula (1), X¹ and X² are each independently a halogen atom, an alkyl having 1 to 10 carbon atoms, an aryl having 6 to 12 carbon atoms or an N,N-dialkyl amino having 2 to 8 carbon atoms.

As the halogen atom described above, for example, it may be fluorine, chlorine, bromine or iodine, preferably fluorine, chlorine or bromine, more preferably chlorine or bromine, and particularly preferably chlorine.

As the alkyl having 1 to 10 carbon atoms described above, for example, it may be methyl, ethyl, propyl, isopropyl, butyl, pentyl, hexyl, heptyl, octyl, nonyl, or decyl. Among them, preferably methyl, ethyl, propyl or isopropyl; more preferably, methyl or ethyl.

As the aryl having 6 to 12 carbon atoms described above, for example, it may be phenyl, benzyl, or phenethyl. Among them, benzyl is preferred.

In the present invention, preferably, X¹ and X² in formula (1) are each independently a halogen atom, an alkyl having 1 to 6 carbon atoms, an aryl having 6 to 10 carbon atoms or an N,N-dialkyl amino having 2 to 6 carbon atoms; more preferably, X¹ and X² are each independently a halogen atom, an alkyl having 1 to 3 carbon atoms, an aryl having 6 to 8 carbon atoms or an N,N-dialkyl amino having 2 to 6 carbon atoms; further preferably, X¹ and X² are each independently F, Cl, Br, I, methyl, ethyl, propyl, phenyl, benzyl, N,N-dimethyl amino, N,N-diethyl amino or N,N-dipropyl amino; particularly preferably, X¹ and X² are each independently Cl, methyl, benzyl, or N,N-dimethyl amino.

In a particularly preferred embodiment of the present invention, X¹ and X² are both Cl.

In another particularly preferred embodiment of the present invention, X¹ and X² are both methyl.

In another particularly preferred embodiment of the present invention, X¹ and X² are both benzyl.

In another particularly preferred embodiment of the present invention, X¹ and X² are both N, N-dimethyl amino.

The following compounds are preferably exemplified as a specific metallocene compound:
In formula (1), M is a titanium atom, X¹ and X² are both Cl;
In formula (1), M is a titanium atom, X¹ and X² are both methyl;
In formula (1), M is a titanium atom, X¹ and X² are both benzyl;
In formula (1), M is titanium atom, X¹ and X² are both N,N-dimethyl amino;
In formula (1), M is zirconium atom, X¹ and X² are both Cl;
In formula (1), M is zirconium atom, X¹ and X² are both methyl;
In formula (1), M is zirconium atom, X¹ and X² are both benzyl;
In formula (1), M is zirconium atom, X¹ and X² are both N,N-dimethyl amino;
In formula (1), M is a hafnium atom, X¹ and X² are both Cl;
In formula (1), M is a hafnium atom, X¹ and X² are both methyl;
In formula (1), M is a hafnium atom, X¹ and X² are both benzyl;
In formula (1), M is a hafnium atom, X¹ and X² are both N,N-dimethyl amino.

The metallocene compound of the present invention can be synthesized according to the conventional methods in the field.

In view of easy synthesis and high yield, it is preferred that X¹ and X² in the metallocene compound are both N,N-dimethyl amino. By arranging that X¹ and X² are both N,N-dimethyl amino, the synthesized metallocene compound has an increased yield and a simple post-treatment process.

In the present invention, a preparation method for a metallocene compound in which X¹ and X² are each an N,N-dialkyl amino having 2 to 8 carbon atoms preferably comprises the following steps:
Step 1) subjecting a compound A and a compound B to a first contact reaction in the presence of a catalyst C and in the presence of a first solvent to obtain an intermediate product D;
Step 2) subjecting the intermediate product D and a compound E to a second contact reaction in the presence of a second solvent to obtain an intermediate product F; and
Step 3) subjecting the intermediate product F and M(NA₂)₄ to a third contact reaction in the presence of a third solvent to obtain a compound H, 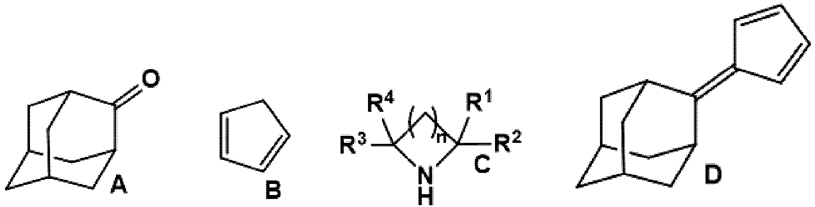 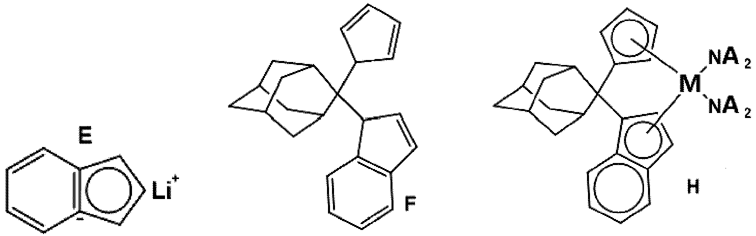 wherein A is hydrocarbyl having 1 to 4 atoms; n is an integer from 1 to 5; R¹, R², R³, R⁴ are each independently hydrogen atom, methyl, ethyl, isopropyl or tert-butyl.

The steps are specifically described as follows:

### Step 1): subjecting a compound A and a compound B to a first contact reaction in the presence of a catalyst C and in the presence of a first solvent to obtain an intermediate product D;

In the step 1), in the catalyst C, n is preferably 2 or 3.

The catalyst C is preferably one or more selected from the group consisting of pyrrolidine, 2-methyl pyrrolidine, 2,5-dimethyl pyrrolidine, 2,5,5-tetramethyl pyrrolidine, piperidine, and 2,2,6,6-tetramethyl piperidine.

The amount of the catalyst C used can be selected depending on the compound A, and preferably, a molar ratio of the compound A to the catalyst C is 1: (1-5), more preferably 1: (1.1-3).

In step 1) mentioned above, the first solvent is preferably methanol, more preferably anhydrous methanol.

The amount of the first solvent used may be selected depending on the compound A, for example, the amount of the first solvent used may be 0.5-10 L, preferably 0.8-5 L, more preferably 0.8-2 L, relative to 1 mole of the compound A.

In step 1) mentioned above, the amout of the compound B used can be selected depending on the compound A, and preferably, a molar ratio of the compound A to the compound B is 1: (1.2-10), more preferably 1: (1.5-5), further preferably from 1: (2-4).

In step 1), a contacting mode of the first contact reaction is not particularly limited, as long as the intermediate product D can be obtained, preferably, the catalyst C is mixed with the first solvent and then performs the first contact reaction with the compound B.

The first contact reaction conditions may include a temperature of 10 to 25°C and a time of 8 to 90 h. After a contact in the first contact reaction, the conventional refining methods in the field may be used for refining. In a preferred embodiment of the invention, after the first contact reaction is completed, subjecting a first contacted reaction product to a solid-liquid separation, whereby the first solvent and unreacted catalyst are removed, then washing a solid separated from the solid-liquid with the first solvent and drying to obtain an intermediate product D.

The solid-liquid separation process is not particularly limited, it may be various methods commonly used in the field for solid-liquid separation, for example, the solid-liquid separation may be performed by filtration and/or centrifugation.

The drying process may use a solvent removal method commonly used in the field, in a preferred embodiment of the invention, the solvent is removed under vacuum at 10 to 25°C.

### Step 2): subjecting the intermediate product D and a compound E to a second contact reaction in the presence of a second solvent to obtain an intermediate product F.

In step 2) mentioned above, the amount of the compound E used may be selected depending on the amount of the intermediate product D used, and preferably, a molar ratio of the intermediate product D to the compound E is 1: (0.9-1.1), more preferably 1: (0.95-1.05).

In step 2) mentioned above, the second solvent is one or more of aromatic hydrocarbons, ethers and halogenated alkanes, preferably one or more of diethyl ether, tetrahydrofuran, toluene, dichloromethane and 1,2-dichloroethane.

The amount of the second solvent used may be selected depending on the intermediate product D, for example, the amount of the second solvent used may be 1 to 30 L, preferably 5 to 20 L, more preferably 12 to 18 L, relative to 1 mole of the intermediate product D.

In step 2), the contacting mode of the second contact reaction is not particularly limited, as long as the intermediate product F can be obtained, preferably, the compound E is dispersed in a part of the second solvent under an inert atmosphere (e.g., it may be a nitrogen atmosphere or an argon atmosphere), a solution in which the intermediate D is dissolved in another part of the second solvent is then dropwise added into a solution in which the compound E is dispersed to perform the second contact reaction.

Preferably, the operation of dispersing the compound E in a part of the second solvent is performed at a temperature from -30°C to 0°C, for example, stirring at -20°C for about 30 minutes.

The second contact reaction conditions may comprise a temperature of 10 to 40°C and a time of 8 to 40 h.

After a contact in the second contact reaction, the conventional refining methods in the field may be used for refining. In a preferred embodiment of the invention, upon completion of the second contact reaction, pouring a second contact reaction product into a saturated aqueous ammonium chloride solution, separating an organic phase, and extracting the aqueous phase (e.g., by diethyl ether), combining the organic phase, drying with a drying agent (e.g., anhydrous sodium sulfate), subsequently removing the organic solvent (e.g., removing the organic solvent under vacuum) to obtain an intermediate product F.

### Step 3): subjecting the intermediate product F and M(NA₂)₄ to a third contact reaction in the presence of a third solvent to obtain a compound H.

In M(NA₂)₄ mentioned above, A is preferably methyl, ethyl or propyl, more preferably methyl or ethyl, particularly preferably methyl.

In M(NA₂)₄ described above, M is preferably a tetravalent transition metal atom, more preferably a titanium atom, a zirconium atom or a hafnium atom, further preferably a titanium atom or a zirconium atom, particularly preferably a zirconium atom.

In step 3) mentioned above, the amount of M(NA₂)₄ used may be selected depending on the amount of the intermediate product F used, preferably, a molar ratio of the intermediate product F to M(NA₂)₄ is 1: (0.95-1.05), more preferably 1: (0.98-1.02).

In step 3) described above, the third solvent may be toluene, for example.

The amount of the third solvent used may be selected depending on the intermediate product F, for example, the amount of the third solvent used may be 1 to 30 L, preferably 5 to 20 L, more preferably 12 to 18 L, relative to 1 mole of the intermediate product F.

The third contact reaction conditions may comprise: carrying out the reaction under reflux for 12 to 36 h.

Preferably, the third contact reaction is carried out under an inert atmosphere, such as a nitrogen atmosphere or an argon atmosphere.

After a contact in the third contact reaction, the conventional refining methods in the field may be used for refining. In a preferred embodiment of the invention, upon completion of the third contact reaction, subjecting a third contacted reaction product to cooling and solid-liquid separation, then removing the solvent under vacuum to obtain the compound H.

The solid-liquid separation process is not particularly limited, it may be various methods commonly used in the field for solid-liquid separation, for example, the solid-liquid separation may be performed by filtration and/or centrifugation.

In the present invention, the preparation method for a metallocene compound including X¹ and X² which are each independently a halogen atom preferably comprises the following steps:

### Step 4): After subjecting the intermediate product F and n-butyl lithium to a fourth contact reaction in the presence of a fourth solvent subjecting the fourth contact reaction product and MX₄ to a fifth contact reaction to obtain a compound I,

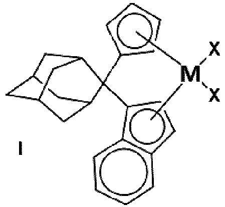

in MX₄ and compound I, X is a halogen atom, and M is a tetravalent transition metal atom.

As the halogen atom described above, for example, it may be fluorine, chlorine, bromine or iodine, preferably fluorine, chlorine or bromine, more preferably chlorine or bromine, particularly preferably chlorine.

Preferably, M is a titanium atom, a zirconium atom or a hafnium atom, more preferably a titanium atom or a zirconium atom, particularly preferably a zirconium atom.

Specific compounds as MX₄ are, for example, zirconium tetrafluoride, zirconium tetrachloride, zirconium tetrabromide, zirconium tetraiodide, titanium tetrafluoride, titanium tetrachloride, titanium tetrabromide, titanium tetraiodide, hafnium tetrafluoride, hafnium tetrachloride, hafnium tetrabromide, or hafnium tetraiodide, preferably zirconium tetrachloride.

In step 4) mentioned above, the fourth solvent is one or more of alkane, aromatic hydrocarbon, ether and halogenated alkane, preferably one or more of n-hexane, diethyl ether, tetrahydrofuran, toluene, dichloromethane and 1,2-dichloroethane.

In step 4) described above, the amount of the fourth solvent used may be selected depending on the intermediate product F, for example, the amount of the fourth solvent used may be 1 to 30 L, preferably 5 to 20 L, more preferably 12 to 18 L, relative to 1 mole of the intermediate product F.

In step 4) mentioned above, the fourth contact reaction mode is preferably: dispersing the intermediate product F in the fourth solvent under an inert atmosphere (e.g., it may be a nitrogen atmosphere or an argon atmosphere), and then dropwise adding an n-butyl lithium solution (e.g., n-butyl lithium hexane solution) into the solution in which the intermediate product F is dispersed to perform the fourth contact reaction.

Preferably, operation of dispersing the intermediate product F in the fourth solvent is performed at a temperature from -30°C to 0°C, for example, stirring at -20°C for about 30 minutes.

The fourth contact reaction conditions may comprise a temperature of 10 to 40°C and a time of 8 to 40 h.

In step 4) mentioned above, a molar ratio of the intermediate product F to n-butyl lithium is preferably within the range of 1: (2-2.4), more preferably within the range of 1: (2.1-2.2).

In step 4) described above, subjecting the fourth contact reaction product and MX₄ to a fifth contact reaction, in the fifth contact reaction, MX₄ may be added directly into the fourth contact reaction product in the form of a solid, or may be used in a mode of being dispersed in a fifth solvent.

The fifth solvent may be the same solvent as the fourth solvent mentioned above.

In step 4) mentioned above, the amount of MX₄ used may be selected depending on the intermediate product F, preferably, a molar ratio of the intermediate product F to MX₄ is 1: (0.95-1).

In step 4) described above, the fifth contact reaction mode is preferably: dropwise adding MX₄ solution into the fourth contact reaction product under an inert atmosphere (e.g., it may be a nitrogen atmosphere or an argon atmosphere) at a temperature from -80°C to 60°C, then carrying out a fifth contact reaction.

The fifth contact reaction conditions may comprise a temperature of 10 to 40°C and a time of 8 to 96 h.

After a contact in the fifth contact reaction, the conventional refining methods in the field may be used for refining. In a preferred embodiment of the invention, upon completion of the fifth contact reaction, subjecting the fifth contact reaction product to solid-liquid separation, extracting the solid obtained from the solid-liquid separation with an organic solvent (preferably toluene) for 3 to 5 times, then combining the liquid phase obtained from the solid-liquid separation with the extraction liquid, removing the solvent under vacuum and washing (e.g., washing with n-hexane), thereby removing the residual solvent in the solid by vacuum to obtain the compound I.

In the invention, a preparation method for the compound I can also comprise: subjecting the second contact reaction product obtained in step 2) directly to a fifth contact reaction with MX₄ to obtain the compound I.

In the present invention, a preparation method for a metallocene compound comprising X¹ and X² which are each an alkyl having 1 to 10 carbon atoms or an aryl having 6 to 12 carbon atoms preferably includes the following steps:

### Step 5): subjecting the compound I and R⁰MgY to a sixth contact reaction in the presence of a sixth solvent to obtain a compound J,

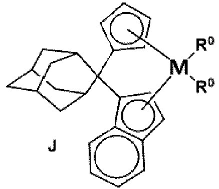

In R⁰MgY, R⁰ is an alkyl having 1 to 10 carbon atoms or an aryl having 6 to 12 carbon atoms; and Y is a chlorine atom or a bromine atom.

The alkyl having 1 to 10 carbon atoms or the aryl having 6 to 12 carbon atoms are as described above.

In step 5) mentioned above, a molar ratio of the compound I to R⁰MgY is preferably 1: (2-3), more preferably 1: (2.2-2.5).

In step 5) described above, the sixth solvent is preferably one or more of alkane, aromatic hydrocarbon, ether and halogenated alkane, more preferably one or more of n-hexane, diethyl ether, tetrahydrofuran, toluene, dichloromethane and 1,2-dichloroethane.

The amount of the sixth solvent used may be selected depending on the compound I, for example, the amount of the sixth solvent used may be 5 to 60 L, preferably 10 to 40 L, more preferably 25 to 32 L, relative to 1 mole of the compound I.

In step 5) mentioned above, the sixth contact reaction mode is preferably: dropwise adding R⁰MgY solution into the mixture of the compound I and the sixth solvent at a temperature of -30°C to 0°C under an inert atmosphere (e.g., it may be a nitrogen atmosphere or an argon atmosphere), and then performing the sixth contact reaction.

The sixth contact reaction conditions may comprise a temperature of 10-40°C and a time of 10-30 h. After a contact in the sixth contact reaction, the conventional refining methods in the field may be used for refining. In a preferred embodiment of the invention, upon completion of the sixth contact reaction, subjecting the sixth contact reaction product to solid-liquid separation, then removing a solvent from the obtained solid under vacuum to obtain the compound J.

The second aspect of the present invention provides a catalyst composition, wherein the catalyst composition comprises the following components:
a) the metallocene compound according to the first aspect of the present invention; and
b) a cocatalyst component.

In the catalyst composition according to the present invention, preferably, the cocatalyst component comprises an alkyl aluminoxane or a combination of an organoboron compound and an organoaluminum compound; more preferably, the cocatalyst component is an alkyl aluminoxane or a combination of an organoboron compound and an organoaluminum compound.

The alkyl aluminoxane is preferably a compound selected from structures shown in formula (2) and/or formula (3), 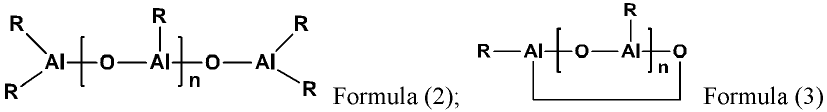 in formula (2) and formula (3), R is selected from an alkyl having 1 to 15 carbon atoms, n represents an integer of 4 to 30; more preferably, R is selected from an alkyl having 1 to 5 carbon atoms, n represents an integer of 10 to 30.

The specific examples of the alkyl may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl, octyl, nonyl, decyl, undecyl, dodecyl, tridecyl, tetradecyl, pentadecyl and the like.

As the aforementioned n, for example, it may be 4, 5, 6, 7, 8, 9, 10, 11, 12, 13, 14, 15, 16, 17, 18, 19, 20, 21, 22, 23, 24, 25, 26, 27, 28, 29, 30 and the like.

The specific examples of the alkyl aluminoxane may be methyl aluminoxane, ethyl aluminoxane, propyl aluminoxane, preferable methyl aluminoxane.

In the catalyst composition according to the present invention, preferably, the organoboron compound is [B(C₆F₅)₄]⁻Z⁺, Z⁺ having a structure shown in formula (4) or formula (5),

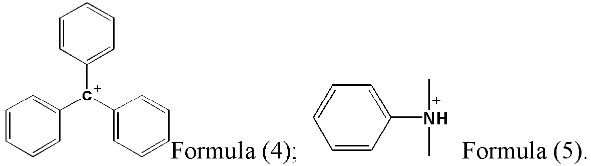

In the catalyst composition according to the present invention, preferably, the organoaluminum compound is a compound having a structure represented by a general formula AlX₁X₂X₃, X₁, X₂ and X₃ are each a halogen atom or an alkyl having 1 to 12 carbon atoms, X₁, X₂ and X₃ may be the same or different, and at least one is an alkyl having 1 to 12 carbon atoms.

The examples of the alkyl having 1 to 12 carbon atoms may be methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl, octyl, nonyl, decyl, undecyl, dodecyl and the like.

The halogen atom described above, for example, may be fluorine, chlorine, bromine or iodine, preferably fluorine, chlorine or bromine, more preferably chlorine or bromine, and particularly preferably chlorine.

In the invention, the specific examples of the organoaluminum compound may be one or a mixture of two or more of diethyl aluminum chloride, triethyl aluminum, tri-isobutyl aluminum, tri-n-hexyl aluminum and tri-n-octyl aluminum, preferably tri-isobutyl aluminum.

In the catalyst composition according to the present invention, the cocatalyst component is an alkyl aluminoxane, and a molar ratio of the metallocene compound to the alkyl aluminoxane calculated in terms of aluminum is 1: (100-50,000), preferably 1: (500-10,000), more preferably 1: (500-2,000).

In the catalyst composition according to the present invention, when the catalyst composition is a combination of an organoboron compound and an organoaluminum compound, a molar ratio of the metallocene compound to the organoboron compound is 1: (1-20), preferably 1: (1-5), more preferably 1: (1-2); a molar ratio of the metallocene compound to the organoaluminum compound is 1: (10-5,000), preferably 1: (50-1,000), more preferably 1: (50-500).

The third aspect of the present invention provides an olefin polymerization method, wherein the method comprises contacting an olefin with the catalyst composition according to the second aspect of the present to carry out a polymerization reaction.

According to the method of the invention, a concentration of the metallocene compound in the polymerization reaction system is preferably within the range from 1×10⁻⁸ mol/L to 1×10⁻² mol/L, more preferably within the range from 1×10⁻⁶ mol/L to 1×10⁻³ mol/L.

According to the method of the invention, preferably, the polymerization reaction is carried out in an inert organic solvent. The inert organic solvent may be one or a mixture of more of straight chain aliphatic hydrocarbons, branched chain aliphatic hydrocarbons, substituted or unsubstituted cyclic aliphatic hydrocarbons, substituted or unsubstituted aromatic hydrocarbons. The specific examples of the inert organic solvent may be hexane, heptane, cyclohexane, cyclooctane, toluene, xylene, among them, preferably one or more of toluene, cyclohexane and hexane. In addition, the amount of the organic solvent used may be determined depending on the reactivity, as long as it ensures that the produced polymer is desirably dissolved in the system, at least the dispersion will not be affected. According to the method of the invention, the olefin is preferably ethylene or a combination of ethylene and α-olefin.

According to the method of the present invention, the α-olefin is preferably one or more selected from the group consisting of propene, 1-butene, 1-hexene, 1-octene and 4-methyl-l-pentene. According to the method of the present invention, when the olefin is ethylene, the ethylene has a partial pressure within the range of 0.1 to 6 MPa, preferably within the range of 0.1 to 3 MPa. According to the method of the invention, when the olefin is a combination of ethylene and α-olefin, the dosages of ethylene and α-olefin may be the conventional dosages in the field for the synthesis of ethylene-α-olefin copolymer, for example, the concentration of α-olefin in the polymerization system is within the range of 0.001 to 8 mol/L, preferably within the range of 0.005 to 4 mol/L. Furthermore, the ethylene has a partial pressure within the range of 0.1 to 6 MPa, preferably within the range of 0.1 to 3 MPa.

According to the method of the invention, the polymerization reaction conditions may be the conventional conditions used in the field for synthesizing polyolefin. Preferably, the polymerization reaction temperature is from -50°C to 200°C, and the polymerization reaction time is within the range of 1 to 300 minutes; more preferably, the polymerization reaction temperature is from -20°C to 150°C, and the polymerization reaction time is within the range of 5 to 60 minutes.

The fourth aspect of the present invention provides a preparation method for an ethylene-cycloolefin copolymer, wherein the method comprises: subjecting ethylene and cycloolefin to a copolymerization reaction by using the catalyst composition according to the second aspect of the present invention.

According to the invention, preferably, a concentration of the metallocene compound in the copolymerization reaction system is within the range from 1×10⁻⁸ mol/L to 1×10⁻² mol/L, more preferably, a concentration of the metallocene compound in the copolymerization reaction system is within the range from 1×10⁻⁶ mol/L to 1×10⁻³ mol/L.

According to the invention, preferably, the copolymerization reaction is carried out in an inert organic solvent. The inert organic solvent may be one or a mixture of more of straight chain aliphatic hydrocarbons, branched chain aliphatic hydrocarbons, substituted or unsubstituted cyclic aliphatic hydrocarbons, substituted or unsubstituted aromatic hydrocarbons. The specific examples of the inert organic solvent may be hexane, heptane, cyclohexane, cyclooctane, toluene, xylene, among them, preferably one or more of toluene, cyclohexane and hexane. In addition, the amount of the organic solvent used may be determined depending on the reactivity, as long as it ensures that the produced polymer is desirably dissolved in the system, at least the dispersion will not be affected.

According to the invention, preferably, the cycloolefin is a cycloolefin having 5 to 18 carbon atoms; more preferably, the cycloolefin is one or more of cyclopentene, cyclohexene, cycloheptene, cyclooctene, norbornene, tetracyclo [6.2.1.13,6.2,7] dodec-4-ene.

According to the present invention, the amount of ethylene and the cycloolefin used may be a conventional amount in the field for synthesizing ethylene-cycloolefin copolymer, for example, a concentration of cycloolefin in the copolymerization reaction system may be 0.001 to 10 mol/L, preferably 0.05 to 5 mol/L. Furthermore, the ethylene has a partial pressure within the range of 0.1 to 6 MPa, preferably within the range of 0.1 to 3 MPa.

According to the method of the invention, the copolymerization conditions may be conventional conditions used in the field for synthesizing polyolefin. Preferably, the copolymerization reaction temperature is from -50°C to 200°C, and the copolymerization reaction time is within the range of 1 to 300 minutes; more preferably, the copolymerization reaction temperature is from -20°C to 150°C, and the copolymerization reaction time is within the range of 5 to 60 minutes.

The fifth aspect of the present invention provides an ethylene-cycloolefin copolymer, wherein the copolymer is prepared with the method according to the fourth aspect of the present invention.

The present invention will be described in detail below with reference to examples, but the invention is not limited to the examples described below.

Unless otherwise specified in the invention, the raw materials used in the following examples and comparative examples were disclosed by the prior art, for examples, the raw materials can be directly purchased, or prepared according to the preparation method disclosed by the prior art.

In the following examples and comparative examples, the ¹H nuclear magnetic resonance (¹H-NMR) of the synthesized compound was carried out on a Bruker AVANCE III-400MHz spectrometer by using CDCl₃ as a solvent at 25°C.

The polymer molecular weight was measured on a Waters Alliance GPCV 2000 through the Gel Permeation Chromatography (GPC) at 150°C with 1,2,4-trichlorobenzene as a solvent.

The content of comonomer in the polymer was determined through a solution ¹³C Nuclear magnetic resonance (¹³C-NMR) experiment, which was conducted on a Bruker AVANCE III-400MHz spectrometer with a 10 mm PASEX 13C-1H/D Z-GRD probe. The spectrometer had a ¹³C resolution of 0.09 Hz. A sample solution was prepared by dissolving 200 mg of polymer material in 2.5 mL of D₄-o-ortho-dichlorobenzene (ODCB-d4) in a 10 mL test tube at 130°C. The ¹³C-NMR measurement experiment was conducted under the conditions comprising a temperature of 125°C, a spin rate of 20Hz, a pulse angle of 90°, continuous Waltz-16 decoupling, a spectral width of 120ppm, an acquisition time of 5s, and a relaxation delay of 10s. The repeated main chain methylene peak was set to 30.0000ppm as a chemical shift reference.

### Example 1

The example served to illustrate the synthesis of metallocene compound H-1.

The metallocene compound H-1: in the compound H, M is zirconium, and NA₂ is dimethyl amino.

### 1) Synthesis of an intermediate product D

Catalyst C (pyrrolidine, 12 mmol) and 30 ml of anhydrous methanol were added into a 250 ml three-necked flask equipped with a magnetic stirrer at 15°C, stirred for 5 min, compound A (1.8 g, 11.98 mmol) was added, stirred for 5 min, compound B (2.0 g, 30.26 mmol) was further added, stirred and subjected to the reaction for 24 h, the reaction temperature was kept not higher than 25°C. The solvent and catalyst were removed by filtration, and the obtained product was washed with anhydrous methanol. Residual solvent was removed at room temperature under vacuum, 2.26 g of a yellow solid was obtained with a yield of 94%.

¹H-NMR(CDCl₃): 6.62-6.55ppm (2H), 6.55-6.48ppm (2H), 3.33-3.24ppm(2H), 2.14-1.85ppm(12H).

### 2) Synthesis of an intermediate product F

244 mg (2.0 mmol) of the reactant E (indenyl lithium) was dispersed in 30 ml of tetrahydrofuran under a nitrogen atmosphere, and stirred at -20°C for 30 min; 400 mg of an intermediate D (2.0 mmol) was dissolved in 10ml of tetrahydrofuran to form a solution, which was slowly and dropwise added into the indenyl lithium tetrahydrofuran solution; after completion of the addition process, the temperature was slowly raised to room temperature, stirred and subjected to the reaction for 24 hours; the reaction mixture was poured into an ammonium chloride saturated aqueous solution, the organic phase was separated, the aqueous phase was extracted by diethyl ether, the organic phases were combined, and dried with anhydrous sodium sulfate, the organic solvent was removed under vacuum, 597 mg of a yellow solid was obtained with a yield of 90%.

### Synthesis of metallocene compound H-1

333 mg of the intermediate product F (1 mmol) was dissolved in 15 ml of toluene under a nitrogen atmosphere, 267 mg of reactant Zr(NMe₂)₄ (1 mmol) was added, subjected to a reflux reaction at 110°C for 17 hours, cooled and then filtered, the solvent was removed under vacuum, 436 mg of an orange-yellow solid was obtained with a yield of 89%.

¹H-NMR(CDCl₃): 7.49-7.46ppm(1H), 7.38-7.35ppm(1H), 7.30-7.28ppm(1H), 7.02-6.98ppm(1H), 6.82-6.78ppm(1H), 6.50-6.45ppm(2H), 6.11-6.08ppm(1H), 5.74-5.71ppm(1H), 5.66-5.63ppm(1H), 3.29-3.24ppm(1H), 2.80-2.74ppm(1H), 2.48-2.46ppm(12H), 2.36-2.29ppm(2H), 2.26-2.18ppm(2H), 2.06-1.84ppm(8H).

### Example 2

### Synthesis of metallocene compound I-1

The metallocene compound I-1: in the compound I, M is zirconium, and X is chlorine atom.

The previously distilled indene (348.5 mg, 3mmol) was weighed and added into 250 mL three-necked flask A, subjected to the vacuum - nitrogen gas replacement for three times, 10mL of previously dehydrated and deoxygenated anhydrous diethyl ether was then added for dissolution. The three-necked flask A was placed in an oil bath with a temperature of -20°C and stirred for 15 minutes. N-butyl lithium (1.05 equivalent weight, 2.5 mol/L of hexane solution) was dropwise added into the three-necked flask A at -20°C, after completion of the dropwise adding process, the three-necked flask A was transferred to room temperature and then stirred for 8 hours. An intermediate product D (631 mg, 1.05 equivalent weight) was weighed and placed in another 100 mL three-necked flask B, after nitrogen gas displacement for three times, 10mL of anhydrous diethyl ether previously treated with a dried molecular sieve was added into the three-necked flask B for dissolution. The three-necked flask A was placed in an oil bath with a temperature of -20°C and stirred for 15 minutes. The solution in the three-necked flask B was dropwise added into the three-necked flask A. After completion of the dropwise adding process, the three-necked flask A was transferred to room temperature condition and stirred for 24 hours. Three-necked flask A was placed in an oil bath with a temperature of -20°C and stirred for 15 minutes. N-butyl lithium (1.05 equivalent weight, 2.5 mol/L of hexane solution) was dropwise added into the three-necked flask A, after completion of the dropwise adding process, the three-necked flask A was transferred to room temperature and then stirred for 8 hours. Three-necked flask A was placed in an oil bath with a temperature of -70°C and stirred for 30 minutes, the solid zirconium tetrachloride (700 mg, 3mmol) was added into the three-necked flask A in three batches under the protection of nitrogen gas, and stirred at room temperature for 72 hours. The reaction mixture was transferred to a centrifuge tube, subjected to centrifugation (3,500 rpm), the supernatant was extracted, the residual solid was extracted with 5 mL of anhydrous diethyl ether, subjected to centrifugation (3,500 rpm), the supernatant was extracted, the extraction was performed in a total of three times, the residual solid was discarded. The supernatant and extract liquor were combined, and the diethyl ether was removed under vacuum. The resulting solids were dissolved by a small amount of toluene and filtered into a sample bottle, after addition of an equivalent volume of n-hexane, the mixture was subjected to standing still in a nitrogen tank at room temperature for 24 hours, 326 mg the solid compound was centrifuged and prepared with a yield of 23%.

¹H-NMR(CDCl₃): 7.65-7.62ppm(1H), 7.52-7.48ppm(1H), 7.36-7.32ppm(1H), 7.05-7.01ppm(1H), 6.91-6.88ppm(1H), 6.56-6.51ppm(2H), 6.15-6.12ppm(1H), 5.78-5.73ppm(1H), 5.69-5.65ppm(1H), 3.30-3.25ppm(1H), 2.83-2.76ppm(1H), 2.37-2.29ppm(2H), 2.27-2.18ppm(2H), 2.08-1.87ppm(8H).

### Example 3

### Synthesis of metallocene compound I-1

The metallocene compound I-1: in the compound I, M is zirconium, and X is chlorine atom.

333 mg of an intermediate product F (1 mmol) was dissolved in 15 mL of toluene under a nitrogen atmosphere, 0.84mL of n-butyl lithium (2.5 mol/L of hexane solution) was dropwise added at a temperature of -20°C, after completion of the dropwise adding process, the three-necked flask A was transferred to room temperature and then stirred for 8 hours. The three-necked flask A was placed in an oil bath with a temperature of -70°C and stirred for 30 minutes, the solid zirconium tetrachloride (233 mg, 1mmol) was added into the three-necked flask A in three batches under the protection of nitrogen gas, and stirred at room temperature for 72 hours. The reaction mixture was transferred to a centrifuge tube, subjected to centrifugation (3,500 rpm), the supernatant was extracted, the residual solid was extracted with 5 mL of anhydrous diethyl ether, subjected to centrifugation (3,500 rpm), the supernatant was extracted, the extraction was performed in a total of three times, the residual solid was discarded. The supernatant and extract liquor were combined, and the diethyl ether was removed under vacuum. The resulting solids were dissolved by a small amount of toluene and filtered into a sample bottle, after addition of an equivalent volume of n-hexane, the mixture was subjected to standing still in a nitrogen tank at room temperature for 24 hours, 259 mg the solid compound was centrifuged and prepared with a yield of 55%.

The obtained solid compound was identified by nuclear magnetic measurement as the metallocene compound I-1.

### Example 4

### Synthesis of metallocene compound J-1

The metallocene compound J-1: in compound J, M is zirconium, and R⁰ is benzyl.

474 mg of metallocene compound I-1 (1 mmol) was dissolved in 30 ml of toluene under a nitrogen atmosphere, the metallocene compound was placed in an oil bath with a temperature of -70°C and stirred for 30 minutes, 2.2 ml of benzyl magnesium chloride solution (1 mol/L of tetrahydrofuran) was dropwise added, the temperature was slowly raised to room temperature, the reaction was performed for 24 hours, the reaction product was filtered, and the solvent was removed under vacuum, 502 mg of an orange-yellow solid was prepared with a yield of 85%.

¹H-NMR(CDCl₃): 7.61-7.58ppm(1H), 7.50-7.47ppm(1H), 7.42-7.38ppm (4H), 7.36-7.32ppm(1H), 7.12-7.10ppm (4H), 7.04-7.00ppm(1H), 6.95-6.88ppm (2H), 6.92-6.88ppm(1H), 6.55-6.51ppm(2H), 6.16-6.11ppm(1H), 5.78-5.73ppm(1H), 5.68-5.64ppm(1H), 3.30-3.25ppm(1H), 2.83-2.74ppm(1H), 2.67-2.61(4H), 2.36-2.27ppm(2H), 2.24-2.13ppm(2H), 2.08-1.190ppm(8H).

### Example 5

### Synthesis of metallocene compound J-2

The metallocene compound J-2: in compound J, M is zirconium, and R⁰ is methyl.

472 mg of metallocene compound I (1 mmol) was dissolved in 30 ml of toluene under a nitrogen atmosphere, and then was placed in an oil bath with a temperature of -70°C and stirred for 30 minutes, 2 ml of methyl magnesium bromide solution (1 mol/L of tetrahydrofuran) was dropwise added, the temperature was slowly raised to room temperature, the reaction was performed for 24 hours, the reaction product was filtered, and the solvent was removed under vacuum, 311 mg of an orange-yellow solid was prepared with a yield of 72%.

¹H-NMR(CDCl₃): 7.64-7.60ppm(1H), 7.50-7.47ppm(1H), 7.35-7.32ppm(1H), 7.05-7.00ppm(1H), 6.91-6.88ppm(1H), 6.56-6.51ppm(2H), 6.15-6.11ppm(1H), 5.76-5.71ppm(1H), 5.68-5.65ppm(1H), 3.30-3.24ppm(1H), 2.83-2.76ppm(1H), 2.37-2.29ppm(2H), 2.27-2.18ppm(2H), 2.08-1.87ppm(8H), -0.99ppm(6H).

### Example 6

The example served to illustrate the ethylene homopolymerization.

The fully oven-dried glass polymerization bottle with a volume of 250 mL was vacuumized, and purged with nitrogen gas, the process was repeated for three times. The polymerization bottle was vacuumized and then filled with ethylene, heated in an oil bath to 70°C, such that the ethylene in the bottle was kept at 1 standard atmospheric pressure. 25 mL of toluene, 1 mL of tri-isobutyl aluminum toluene solution (containing 1.0 mmol tri-isobutyl aluminum), and 2 mL of catalyst toluene solution (containing 5 µmol of compound I-1) were added into the polymerization bottle in sequence, after the temperature was stabilized at 70°C, 2 mL of triphenylcarbenium tetrakis(pentafluoro phenyl) borate toluene solution (containing 6.0 µmol of triphenylcarbenium tetrakis(pentafluorophenyl) borate) were added, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 0.72g of polymer, the activity was 432 Kg polymer/mol catalyst/hour, the weight average molecular weight of the polymer measured by Gel Permeation Chromatography was Mw=6.5 × 10⁴, the molecular weight distribution (MWD) =1.98.

### Example 7

The example served to illustrate the ethylene homopolymerization.

The fully oven-dried glass polymerization bottle with a volume of 250 mL was vacuumized, and purged with nitrogen gas, the process was repeated for three times. The polymerization bottle was vacuumized and then filled with ethylene under the control of a solenoid valve, heated in an oil bath to 70°C, such that the ethylene in the bottle was kept at 1 standard atmospheric pressure. 25 mL of toluene, 1 mL of tri-isobutyl aluminum toluene solution (containing 1.0 mmol tri-isobutyl aluminum), and 2 mL of catalyst toluene solution (containing 5 µmol of compound I-1) were added into the polymerization bottle in sequence, after the temperature was stabilized at 70°C, 2 mL of N,N-dimethylanilinium tetrakis(pentafluorophenyl) borate toluene solution (containing 6.0 µmol of N,N-dimethylanilinium tetrakis(pentafluorophenyl) borate) were added, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for more than 6 hours, the mixture was filtered to obtain a polymer, which was dried under vacuum at 60°C for 24 hours to obtain 0.81g of polymer, the activity was 486 Kg polymer/mol catalyst/hour, the weight average molecular weight of the polymer measured by Gel Permeation Chromatography was Mw=7.2×10⁴, the molecular weight distribution (MWD) =2.03.

### Example 8

The example served to illustrate the ethylene homopolymerization.

The fully oven-dried glass polymerization bottle with a volume of 250 mL was vacuumized, and purged with nitrogen gas, the process was repeated for three times. The polymerization bottle was vacuumized and then filled with ethylene under the control of a solenoid valve, heated in an oil bath to 70°C, such that the ethylene in the bottle was kept at 1 standard atmospheric pressure. 25 mL of toluene and 3 mL of methyl aluminoxane toluene solution (containing 5.0 mmol of methyl aluminoxane) were added into the polymerization bottle in sequence, after the temperature was stabilized at 70°C, 2 mL of catalyst toluene solution (containing 5 µmol of compound I-1) were added, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 0.68g of polymer, the activity was 408 Kg polymer/mol catalyst/hour, the weight average molecular weight of the polymer measured by Gel Permeation Chromatography was Mw=6.7× 10⁴, the molecular weight distribution (MWD) =2.11.

### Example 9

The example served to illustrate the ethylene homopolymerization.

The fully oven-dried glass polymerization bottle with a volume of 100 mL was vacuumized, and purged with nitrogen gas, the process was repeated for three times. The polymerization bottle was finally filled with ethylene. The heating temperature was set to 75°C, during the heating process, 50 mL of toluene and 1 mL of tri-isobutyl aluminum toluene solution (containing 1.0 mmol tri-isobutyl aluminum) were added into the polymerization bottle in sequence, after the temperature was stabilized at 75°C, 2 mL of catalyst toluene solution (containing 2 µmol of compound I-1) was further added, after 5 minutes, 2 mL of triphenylcarbenium tetrakis (pentafluorophenyl) borate toluene (containing 2.4 µmol of triphenylcarbenium tetrakis (pentafluorophenyl) borate) were added, the ethylene was rapidly pressurized to 6 standard atmospheric pressure, the heating temperature was set to 80°C, the timekeeping was started. During the reaction process, ethylene was replenished when ethylene was consumed, so that the total pressure in the bottle was kept at 6 standard atmospheric pressure. After 30 minutes, the input of ethylene was shut down, the reaction solution was poured into a beaker, 300 mL of ethanol and 5 mL of concentrated hydrochloric acid were added, stirred for more than 6 hours, the mixture was filtered to obtain a polymer, which was dried under vacuum at 60°C for 24 hours to obtain 5.70g of polymer, the activity was 5,700 Kg polymer/mol catalyst/hour, the weight average molecular weight of the polymer measured by Gel Permeation Chromatography was Mw=14.7×10⁴, the molecular weight distribution (MWD) =2.25.

### Example 10

The example served to illustrate the ethylene homopolymerization.

The polymer was prepared according to the method in Example 8, except that the compound I-1 was replaced with the same molar amount of compound H-1, similarly, 0.65g of polymer was obtained, the activity was 3,890 Kg polymer/mol catalyst/hour, the weight average molecular weight of the polymer measured by Gel Permeation Chromatography was Mw=6.9×10⁴, the molecular weight distribution (MWD) =2.16.

### Example 11

The example served to illustrate the ethylene homopolymerization.

The polymer was prepared according to the method in Example 8, except that the compound I-1 was replaced with the same molar amount of compound J-1, similarly, 0.93g of polymer was obtained, the activity was 558 Kg polymer/mol catalyst/hour, the weight average molecular weight of the polymer measured by Gel Permeation Chromatography was Mw=9.6×10⁴, the molecular weight distribution (MWD) =2.25.

### Example 12

The example served to illustrate the ethylene homopolymerization.

The polymer was prepared according to the method in Example 8, except that the compound I-1 was replaced with the same molar amount of compound J-2, similarly, 0.99g of polymer was obtained, the activity was 594 Kg polymer/mol catalyst/hour, the weight average molecular weight of the polymer measured by Gel Permeation Chromatography was Mw=8.2×10⁴, the molecular weight distribution (MWD) =2.19.

### Comparative Example 1

The fully oven-dried glass polymerization bottle with a volume of 250 mL was vacuumized, and purged with nitrogen gas, the process was repeated for three times. The polymerization bottle was vacuumized and then filled with ethylene under the control of a solenoid valve, heated in an oil bath to 70°C, such that the ethylene in the bottle was kept at 1 standard atmospheric pressure. 25 mL of toluene and 3 mL of methyl aluminoxane toluene solution (containing 5.0 mmol methyl aluminoxane) were added in sequence, after the temperature was stabilized at 70°C, 2 mL of catalyst toluene solution (containing 5 µmol of zirconocene dichloride) were further added into the polymerization bottle, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 0.47g of polymer, the activity was 282 Kg polymer/mol catalyst/hour, the weight average molecular weight of the polymer measured by Gel Permeation Chromatography was Mw=2.6×10⁴, the molecular weight distribution (MWD) =1.99.

### Example 13

The example served to illustrate the copolymerization of ethylene with 1-hexene.

The fully oven-dried glass polymerization bottle with a volume of 250 mL was vacuumized, and purged with nitrogen gas, the process was repeated for three times. The polymerization bottle was vacuumized and then filled with ethylene under the control of a solenoid valve, heated in an oil bath to 70°C, such that the ethylene in the bottle was kept at 1 standard atmospheric pressure. 24 mL of toluene, 1 ml of 1-hexene, and 3 ml methyl aluminoxane toluene solution (containing 5.0 mmol methyl aluminoxane) were added in sequence, after the temperature was stabilized at 70°C, 2 mL of catalyst toluene solution (containing 5 µmol of compound I-1) were further added into the polymerization bottle, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 1.82g of polymer, the activity was 1,092 Kg polymer/mol catalyst/hour, the weight average molecular weight of the polymer measured by Gel Permeation Chromatography was Mw=3.7×10⁴, the molecular weight distribution (MWD) =1.88, the content of 1-hexene unit measured by NMR carbon-13 spectroscopy was 8.7 mol%.

### Example 14

The example served to illustrate the copolymerization of ethylene with 1-hexene.

The polymer was prepared according to the method in Example 13, except that the compound I-1 was replaced with the same molar amount of compound H-1, similarly, 1.52g of polymer was obtained, the activity was 912 Kg polymer/mol catalyst/hour, the weight average molecular weight of the polymer measured by Gel Permeation Chromatography was Mw=3.1×10⁴, the molecular weight distribution (MWD) =1.91, the content of 1-hexene unit measured by NMR carbon-13 spectroscopy was 9.1 mol%.

### Example 15

The example served to illustrate the copolymerization of ethylene with 1-hexene.

The polymer was prepared according to the method in Example 13, except that the compound I-1 was replaced with the same molar amount of compound J-1, similarly, 2.01g of polymer was obtained, the activity was 1,206 Kg polymer/mol catalyst/hour, the weight average molecular weight of the polymer measured by Gel Permeation Chromatography was Mw=4.1×10⁴, the molecular weight distribution (MWD) =1.90, the content of 1-hexene unit measured by NMR carbon-13 spectroscopy was 8.9 mol%.

### Example 16

The example served to illustrate the copolymerization of ethylene with 1-hexene.

The polymer was prepared according to the method in Example 13, except that the compound I-1 was replaced with the same molar amount of compound J-2, similarly, 2.11g of polymer was obtained, the activity was 1,266 Kg polymer/mol catalyst/hour, the weight average molecular weight of the polymer measured by Gel Permeation Chromatography was Mw=4.0×10⁴, the molecular weight distribution (MWD) =1.86, the content of 1-hexene unit measured by NMR carbon-13 spectroscopy was 9.4 mol%.

### Comparative Example 2

The polymer was prepared according to the method in Example 13, except that the compound I-1 was replaced with the same molar amount of zirconocene dichloride, similarly, 1.01g of polymer was obtained, the activity was 606 Kg polymer/mol catalyst/hour, the weight average molecular weight of the polymer measured by Gel Permeation Chromatography was Mw=0.97×10⁴, the molecular weight distribution (MWD) =1.94, the content of 1-hexene unit measured by NMR carbon-13 spectroscopy was 7.8 mol%.

### Example 17

The example served to illustrate the copolymerization of ethylene-norbornene.

The fully oven-dried glass polymerization bottle with a volume of 250 mL was added with 3.77g of norbornene and then vacuumized, and purged with nitrogen gas, the process was repeated for three times. The polymerization bottle was vacuumized and then filled with ethylene, heated in an oil bath to 70°C, such that the ethylene in the bottle was kept at 1 standard atmospheric pressure. 25 mL of toluene and 3 ml methyl aluminoxane toluene solution (containing 5.0 mmol methyl aluminoxane) were added in sequence, after the temperature was stabilized at 70°C, 2 mL of catalyst toluene solution (containing 2 µmol of metallocene compound I-1) were further added into the polymerization bottle, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 2.87g of polymer, the activity was 4,305 Kg polymer/mol catalyst/hour, the weight average molecular weight of the polymer measured by Gel Permeation Chromatography was Mw=26.6×10⁴, the molecular weight distribution (MWD) =1.89, the content of norbornene unit measured by NMR carbon-13 spectroscopy was 54.3 mol%.

### Comparative Example 3

The polymer was prepared according to the method in Example 17, except that the metallocene compound I-1 was replaced with the same molar amount of diphenylmethylidene(cyclopentadienyl)(9-fluorenyl)zirconium dichloride, similarly, 2.01g of polymer was obtained, the activity was 3,015 Kg polymer/mol catalyst/hour, the weight average molecular weight of the polymer measured by Gel Permeation Chromatography was Mw=12.6×10⁴, the molecular weight distribution (MWD) =2.27, the content of norbornene unit measured by NMR carbon-13 spectroscopy was 51.0 mol%.

### Example 18

The example served to illustrate the copolymerization of ethylene-norbornene.

The fully oven-dried glass polymerization bottle with a volume of 250 mL was added with 3.77g of norbornene and then vacuumized, and purged with nitrogen gas, the process was repeated for three times. The polymerization bottle was vacuumized and then filled with ethylene, heated in an oil bath to 70°C, such that the ethylene in the bottle was kept at 1 standard atmospheric pressure. 25 mL of toluene, 1 mL of tri-isobutyl aluminum toluene solution (containing 1.0 mmol tri-isobutyl aluminum), and 2 mL of catalyst toluene solution (containing 2 µmol metallocene compound I-l) were added in sequence, after the temperature was stabilized at 70°C, 2 mL of triphenylcarbenium tetrakis (pentafluorophenyl) borate toluene solution (containing 2.4 µmol triphenylcarbenium tetrakis (pentafluorophenyl) borate) were further added into the polymerization bottle, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 2.97g of polymer, the activity was 4,455 Kg polymer/mol catalyst/hour, the weight average molecular weight of the polymer measured by Gel Permeation Chromatography was Mw=27.1×10⁴, the molecular weight distribution (MWD) =1.96, the content of norbornene unit measured by NMR carbon-13 spectroscopy was 55.8 mol%.

### Comparative Example 4

The polymer was prepared according to the method in Example 18, except that the metallocene compound I-1 was replaced with the same molar amount of diphenylmethylene (cyclopentadienyl) (9-fluorenyl) zirconium dichloride, similarly, 2.51g of the polymer was obtained, the activity was 3,765 Kg polymer/mol catalyst/hour, the weight average molecular weight of the polymer measured by Gel Permeation Chromatography was Mw=18.5×10⁴, the molecular weight distribution (MWD) =2.07, the content of norbornene unit measured by NMR carbon-13 spectroscopy was 54.1 mol%.

### Example 19

The example served to illustrate the copolymerization of ethylene-norbornene.

The fully oven-dried glass polymerization bottle with a volume of 250 mL was added with 4.71g of norbornene and then vacuumized, and purged with nitrogen gas, the process was repeated for three times. The polymerization bottle was vacuumized and then filled with ethylene, heated in an oil bath to 70°C, such that the ethylene in the bottle was kept at 1 standard atmospheric pressure. 25 mL of toluene, 1 mL of tri-isobutyl aluminum toluene solution (containing 1.0 mmol tri-isobutyl aluminum), and 2 mL of catalyst toluene solution (containing 2 µmol metallocene compound I-l) were added in sequence, after the temperature was stabilized at 70°C, 2 mL of N,N-dimethylanilinium tetrakis(pentafluorophenyl) borate toluene solution (containing 6.0 µmol of N,N-dimethylanilinium tetrakis(pentafluorophenyl) borate) were further added into the polymerization bottle, the timekeeping was started. During the reaction process, ethylene was replenished when ethylene was consumed, so that the ethylene in the bottle was kept at 1 standard atmospheric pressure. After 20 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 3.02g of polymer, the activity was 4,530 Kg polymer/mol catalyst/hour, the weight average molecular weight of the polymer measured by Gel Permeation Chromatography was Mw=7.3×10⁴, the molecular weight distribution (MWD) =1.90, the content of norbornene unit measured by NMR carbon-13 spectroscopy was 55.0 mol%.

### Example 20

The example served to illustrate the copolymerization of ethylene-norbornene.

The fully oven-dried stainless steel polymerization kettle with a volume of 100 mL was added with 20g of norbornene and then vacuumized, and purged with nitrogen gas, the process was repeated for three times, the ethylene was finally filled into the polymerization kettle. The heating temperature was set to 75°C, during the heating process, 30 mL of toluene and 1 mL of tri-isobutyl aluminum toluene solution (containing 1.0 mmol tri-isobutyl aluminum) were added in sequence, after the temperature was stabilized at 75°C, 2 mL of catalyst toluene solution (containing 2.0 µmol of metallocene compound I-1) were added, after 5 minutes, 2 mL of a triphenylcarbenium tetrakis(pentafluorophenyl) borate toluene solution (containing 2.4 µmol triphenylcarbenium tetrakis(pentafluorophenyl) borate) was added, the ethylene was rapidly pressurized to 2 standard atmospheric pressure, the heating temperature was set to 80°C, the timekeeping was started. During the reaction process, ethylene was continuously replenished when ethylene was consumed, so that the total pressure in the polymerization kettle was always kept at 2 standard atmospheric pressure. After 30 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 11.95g of polymer, the activity was 11,950 Kg polymer/mol catalyst/hour, the weight average molecular weight of the polymer measured by Gel Permeation Chromatography was Mw=42.5 × 10⁴, the molecular weight distribution (MWD) =2.00, the content of norbornene unit measured by NMR carbon-13 spectroscopy was 52.7 mol%.

### Example 21

The example served to illustrate the copolymerization of ethylene-norbornene.

The fully oven-dried stainless steel polymerization kettle with a volume of 100 mL was added with 20g of norbornene and then vacuumized, and purged with nitrogen gas, the process was repeated for three times, the ethylene was finally filled into the polymerization kettle. The heating temperature was set to 75°C, during the heating process, 30 mL of toluene and 1 mL of tri-isobutyl aluminum toluene solution (containing 1.0 mmol tri-isobutyl aluminum) were added in sequence, after the temperature was stabilized at 75°C, 2 mL of catalyst toluene solution (containing 2.0 µmol of metallocene compound I-1) were added, after 5 minutes, 2 mL of a triphenylcarbenium tetrakis(pentafluorophenyl) borate toluene solution (containing 2.4 µmol triphenylcarbenium tetrakis(pentafluorophenyl) borate) was added, the ethylene was rapidly pressurized to 4 standard atmospheric pressure, the heating temperature was set to 80°C, the timekeeping was started. During the reaction process, ethylene was continuously replenished when ethylene was consumed, so that the total pressure in the polymerization kettle was always kept at 4 standard atmospheric pressure. After 30 minutes, the input of ethylene was shut down, the reaction solution was poured into a beaker, 300 mL of ethanol and 5 mL of concentrated hydrochloric acid were added, stirred for 6 hours or more, the mixture was filtered to obtain a polymer, which was dried under vacuum at 60°C for 24 hours to obtain 16.37g of polymer, the activity was 16,370 Kg polymer/mol catalyst/hour, the weight average molecular weight of the polymer measured by Gel Permeation Chromatography was Mw=46.8×10⁴, the molecular weight distribution (MWD) =1.98, the content of norbornene unit measured by NMR carbon-13 spectroscopy was 49.7 mol%.

### Example 22

The example served to illustrate the copolymerization of ethylene-norbornene.

The polymer was prepared according to the method in Example 17, except that the metallocene compound I-1 was replaced with the same molar amount of metallocene compound H-1, similarly, 2.80g of polymer was obtained, the activity was 4,200 Kg polymer/mol catalyst/hour, the weight average molecular weight of the polymer measured by Gel Permeation Chromatography was Mw=30.1×10⁴, the molecular weight distribution (MWD) =2.11, the content of norbornene unit measured by NMR carbon-13 spectroscopy was 55.0 mol%.

### Example 23

The example served to illustrate the copolymerization of ethylene-norbornene.

The polymer was prepared according to the method in Example 18, except that the metallocene compound I-1 was replaced with the same molar amount of metallocene compound H-1, similarly, 2.88g of polymer was obtained, the activity was 4,320 Kg polymer/mol catalyst/hour, the weight average molecular weight of the polymer measured by Gel Permeation Chromatography was Mw=31.5×10⁴, the molecular weight distribution (MWD) =1.99, the content of norbornene unit measured by NMR carbon-13 spectroscopy was 54.9 mol%.

### Example 24

The example served to illustrate the copolymerization of ethylene-norbornene.

The polymer was prepared according to the method in Example 17, except that the metallocene compound I-1 was replaced with the same molar amount of metallocene compound J-1, similarly, 3.23g of polymer was obtained, the activity was 4,845 Kg polymer/mol catalyst/hour, the weight average molecular weight of the polymer measured by Gel Permeation Chromatography was Mw=31.1×10⁴, the molecular weight distribution (MWD) =2.01, the content of norbornene unit measured by NMR carbon-13 spectroscopy was 55.0 mol%.

### Example 25

The example served to illustrate the copolymerization of ethylene-norbornene.

The polymer was prepared according to the method in Example 18, except that the metallocene compound I-1 was replaced with the same molar amount of metallocene compound J-1, similarly, 3.51g of polymer was obtained, the activity was 5,265 Kg polymer/mol catalyst/hour, the weight average molecular weight of the polymer measured by Gel Permeation Chromatography was Mw=31.9×10⁴, the molecular weight distribution (MWD) =2.11, the content of norbornene unit measured by NMR carbon-13 spectroscopy was 54.8 mol%.

### Example 26

The example served to illustrate the copolymerization of ethylene-norbornene.

The polymer was prepared according to the method in Example 17, except that the metallocene compound I-1 was replaced with the same molar amount of metallocene compound J-2, similarly, 3.15g of polymer was obtained, the activity was 4,725 Kg polymer/mol catalyst/hour, the weight average molecular weight of the polymer measured by Gel Permeation Chromatography was Mw=30.5×10⁴, the molecular weight distribution (MWD) =2.08, the content of norbornene unit measured by NMR carbon-13 spectroscopy was 54.6 mol%.

### Example 27

The example served to illustrate the copolymerization of ethylene-norbornene.

The polymer was prepared according to the method in Example 18, except that the metallocene compound I-1 was replaced with the same molar amount of metallocene compound J-2, similarly, 3.25g of polymer was obtained, the activity was 4,875 Kg polymer/mol catalyst/hour, the weight average molecular weight of the polymer measured by Gel Permeation Chromatography was Mw=32.2×10⁴, the molecular weight distribution (MWD) =2.02, the content of norbornene unit measured by NMR carbon-13 spectroscopy was 54.8 mol%.

### Comparative Example 5

The polymer was prepared according to the method in Example 17, except that the metallocene compound I-1 was replaced with the same molar amount of ref-1, similarly, 1.82g of polymer was obtained, the activity was 2,730 Kg polymer/mol catalyst/hour, the weight average molecular weight of the polymer measured by Gel Permeation Chromatography was Mw=14.8×10⁴, the molecular weight distribution (MWD) =2.32, the content of norbornene unit measured by NMR carbon-13 spectroscopy was 44.2 mol%.

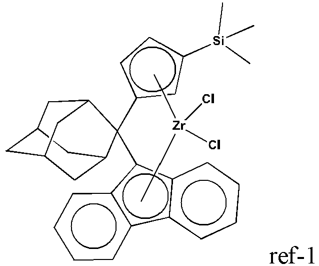

### Comparative Example 6

The polymer was prepared according to the method in Example 17, except that the metallocene compound I-1 was replaced with the same molar amount of ref-2, similarly, 1.56g of polymer was obtained, the activity was 2,340 Kg polymer/mol catalyst/hour, the weight average molecular weight of the polymer measured by Gel Permeation Chromatography was Mw=13.9×10⁴, the molecular weight distribution (MWD) =2.28, the content of norbornene unit measured by NMR carbon-13 spectroscopy was 45.4 mol%.

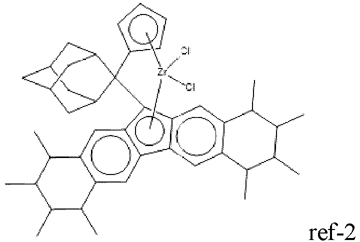

Preferred embodiments of the present invention are described in detail above, but the present invention is not limited thereto. A variety of simple modifications can be made in regard to the technical solutions of the present invention within the scope of the technical concept of the present invention, including a combination of individual technical features in any other suitable manner, such simple modifications and combinations thereof should also be regarded as the content disclosed by the present invention, each of them falls into the protection scope of the present invention.

## Claims

1. A metallocene compound, **characterized by** having a structure represented by formula (1), 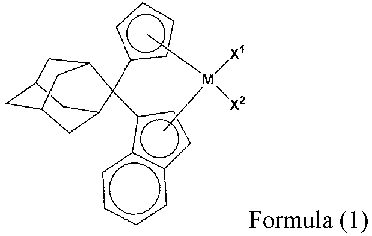 wherein in formula (1), M is a tetravalent transition metal atom; and X¹ and X² are each independently a halogen atom, an alkyl having 1 to 10 carbon atoms, an aryl having 6 to 12 carbon atoms or an N,N-dialkyl amino having 2 to 8 carbon atoms.

2. The metallocene compound according to claim 1, wherein M is a titanium atom, a zirconium atom or a hafnium atom, preferably a titanium atom or a zirconium atom, more preferably a zirconium atom; and X¹ and X² are each independently a halogen atom, an alkyl having 1 to 6 carbon atoms, an aryl having 6 to 10 carbon atoms or an N,N-dialkyl amino having 2 to 6 carbon atoms; or M is a titanium atom or a zirconium atom; X¹ and X² are each independently F, Cl, Br, I, methyl, ethyl, propyl, phenyl, benzyl, N,N-dimethyl amino, N,N-diethyl amino or N,N-dipropyl amino; or M is a titanium atom or a zirconium atom; and X¹ and X² are each independently Cl, methyl, benzyl, or N,N-dimethyl amino.

3. A catalyst composition, **characterized by** comprising the following components:
a) the metallocene compound according to claim 1 or 2;
b) a cocatalyst component.

4. The catalyst composition according to claim 3, wherein the cocatalyst component comprises an alkyl aluminoxane or a combination of an organoboron compound and an organoaluminum compound; or
the cocatalyst component is an alkyl aluminoxane or a combination of an organoboron compound and an organoaluminum compound.

5. The catalyst composition according to claim 4, wherein the alkyl aluminoxane is a compound selected from structures shown in formula (2) and/or formula (3), 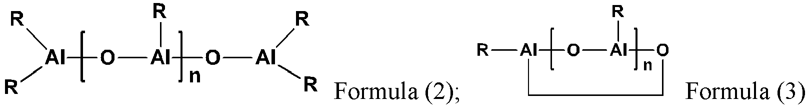 in formula (2) and formula (3), R is selected from an alkyl having 1 to 15 carbon atoms, n represents an integer of 4 to 30; or
the alkyl aluminoxane is methyl aluminoxane.

6. The catalyst composition according to claim 4, wherein the organoboron compound is [B(C₆F₅)₄]⁻Z⁺, Z⁺ having a structure shown in formula (4) or formula (5),

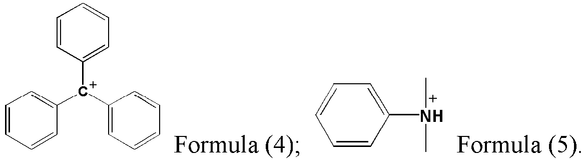

7. The catalyst composition according to claim 4, wherein the organoaluminum compound is a compound having a structure represented by a general formula AlX₁X₂X₃, X₁, X₂ and X₃ are each a halogen atom or an alkyl having 1 to 12 carbon atoms, X₁, X₂ and X₃ can be the same or different, and at least one of X₁, X₂ and X₃ is an alkyl having 1 to 12 carbon atoms; or
the organoaluminum compound is one or a mixture of two or more of diethyl aluminum chloride, triethyl aluminum, tri-isobutyl aluminum, tri-n-hexyl aluminum and tri-n-octyl aluminum, preferably tri-isobutyl aluminum.

8. The catalyst composition according to claim 4, wherein the cocatalyst component is an alkyl aluminoxane, and a molar ratio of the metallocene compound to the alkyl aluminoxane in terms of aluminum is 1: (100-50,000); or
the cocatalyst component is an alkyl aluminoxane, a molar ratio of the metallocene compound to the alkyl aluminoxane in terms of aluminum is 1: (500-2,000).

9. The catalyst composition according to claim 4, wherein the cocatalyst component is a combination of an organoboron compound and an organoaluminum compound, a molar ratio of the metallocene compound to the organoboron compound is 1: (1-20), and a molar ratio of the metallocene compound to the organoaluminum compound is 1: (10-5,000); or
the cocatalyst component is a combination of an organoboron compound and an organoaluminum compound, a molar ratio of the metallocene compound to the organoboron compound is 1: (1-2), and a molar ratio of the metallocene compound to the organoaluminum compound is 1: (50-500).

10. An olefin polymerization method, **characterized by** that the method comprises contacting an olefin with the catalyst composition according to any one of claims 3 to 9 to carry out a polymerization reaction.

11. The method according to claim 10, wherein a concentration of the metallocene compound in the polymerization reaction system is within a range from 1×10⁻⁸ mol/L to 1×10⁻² mol/L; or
a concentration of the metallocene compound in the polymerization reaction system is within a range from 1×10⁻⁶ mol/L to 1×10⁻³ mol/L.

12. The method according to claim 10, wherein the olefin is ethylene or a combination of ethylene and α-olefin; or
the α-olefin is one or more selected from the group consisting of propene, 1-butene, 1-hexene, 1-octene and 4-methyl-1-pentene.

13. The method according to claim 12, wherein the ethylene has a partial pressure within a range of 0.1 to 6 MPa.

14. The method according to claim 10, wherein the polymerization reaction is performed in the presence of an organic solvent, which is one or more of toluene, cyclohexane and hexane.

15. The method according to any one of claims 10 to 14, wherein the polymerization reaction temperature is from -50°C to 200°C, and the polymerization reaction time is within the range of 1 to 300 minutes.

16. A preparation method for an ethylene-cycloolefin copolymer, **characterized by** that the method comprises: subjecting ethylene and cycloolefin to a copolymerization reaction by using the catalyst composition according to any one of claims 3 to 9.

17. The method according to claim 16, wherein a concentration of the metallocene compound in the copolymerization reaction system is within the range from 1×10⁻⁸ mol/L to 1×10⁻² mol/L; or
a concentration of the metallocene compound in the copolymerization reaction system is within the range from 1×10⁻⁶ mol/L to 1×10⁻³ mol/L.

18. The method according to claim 16, wherein the cycloolefin is one or more of cyclopentene, cyclohexene, cycloheptene, cyclooctene, norbornene, tetracyclo [6.2.1.13,6.2,7] dodec-4-ene.

19. The method according to any one of claims 16 to 18, wherein the ethylene has a partial pressure within the range of 0.1 to 6 MPa.

20. The method according to any one of claims 16 to 18, wherein the copolymerization reaction is performed in the presence of an organic solvent, which is one or more of toluene, cyclohexane and hexane.

21. The method according to any one of claims 16 to 18, wherein the copolymerization reaction temperature is from -50°C to 200°C, and the copolymerization reaction time is within the range of 1 to 300 minutes.

22. An ethylene-cycloolefin copolymer, **characterized by** that the copolymer is prepared with the method according to any one of claims 16 to 21.
